# EUROPEAN PATENT APPLICATION

(11) **EP 2 533 478 A1**
(43) Date of publication of application: **12.12.2012**
(21) Application number: 11777255.8
(22) Date of filing: 28.05.2011
(51) Int. Cl.: H04L 12/56

(54) **METHOD, TERMINAL AND GATEWAY FOR TRANSMITTING INTERNET PROTOCOL VERSION 6 PACKETS IN INTERNET PROTOCOL VERSION 4 NETWORK**

(30) Priority: 17.11.2010 CN 201010547912; 09.10.2010 CN 201010508123
(71) Applicant: Huawei Technologies Co., Ltd., Shenzhen, Guangdong 518129 (CN)
(72) Inventor: LU, Xushan, Guangdong 518129 (CN); ZHOU, Qian, Guangdong 518129 (CN); NIU, Lehong, Guangdong 518129 (CN); HUANG, Jing, Guangdong 518129 (CN); PENG, Jun, Guangdong 518129 (CN)
(74) Representative: Aufhauser, Christoph
(86) International application number: PCT/CN2011/074823
(87) International publication number: WO 2011/137836

(57) **Abstract**

The present invention provides a method, a terminal, and a gateway for transmitting an IPv6 packet in an IPv4 network. The method includes: obtaining, by an IPv6 terminal, an IPv6 address of the terminal, where the IPv6 address comprises an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway comprise the same IPv4 address; and sending, by the IPv6 terminal, an IPv6 packet to the gateway, where the IPv6 packet comprises the IPv6 address as a source address. In embodiments of the present invention, traversal of an IPv6 packet through an IPv4 network can be implemented, and IPv4 address resources can be saved.

## Description

This application claims priority to Chinese Patent Application No. CN 201010508123.8, filed with the Chinese Patent Office on October 9, 2010, and entitled "METHOD, TERMINAL, AND GATEWAY FOR TRANSMITTING IPV6 PACKET IN IPV4 NETWORK", and Chinese Patent Application No. CN 201010547912.2, filed with the Chinese Patent Office on November 17, 2010, and entitled "METHOD, TERMINAL, AND GATEWAY FOR TRANSMITTING IPV6 PACKET IN IPV4 NETWORK", all of which are incorporated herein by reference in their entireties.

### FIELD OF THE INVENTION

The present invention relates to network communications technologies, and in particular, to a method, a terminal, and a gateway for transmitting an IPv6 packet in an IPv4 network.

### BACKGROUND OF THE INVENTION

Because IPv4 addresses will be exhausted soon, operators need to switch their networks and subscribers to IPv6. If an existing network used to support an IPv4 service is upgraded to support IPv6, the investment will be too large and an unpredictable problem may arise due to the network upgrade. Therefore, a mechanism is needed to provide an IPv6 service in an existing IPv4 network. In an existing solution for traversal of an IPv6 packet through an IPv4 network, each IPv6 address corresponds to one IPv4 address, which cannot solve a problem of IPv4 address shortage.

### SUMMARY OF THE INVENTION

Embodiments of the present invention provides a method, a terminal, and a gateway for transmitting an IPv6 packet in an IPv4 network, so as to implement traversal of the IPv6 packet through the IPv4 network and save IPv4 addresses.

In one aspect, an embodiment of the present invention provides a method for transmitting an IPv6 packet in an IPv4 network, including:
obtaining, by an IPv6 terminal, an IPv6 address of the terminal, where the IPv6 address includes an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway include the same IPv4 address; and
sending, by the IPv6 terminal, an IPv6 packet to the gateway, where IPv6 packet includes the IPv6 address as a source address.

In another aspect, an embodiment of the present invention provides a method for transmitting an IPv6 packet in an IPv4 network, including:
receiving, by a first gateway, an IPv6 packet sent by an IPv6 terminal, where the IPv6 packet includes a destination IPv6 address; and
if the destination IPv6 address includes an IPv4 address, encapsulating, by the first gateway, the IPv6 packet in an IPv4 packet of which a destination address is the IPv4 address, and sending the IPv4 packet to a second gateway, where the IPv4 address included in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway include the same IPv4 address.

In one aspect, an embodiment of the present invention provides a terminal, including:
an obtaining module, configured to obtain an IPv6 address of the terminal, where the IPv6 address includes an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway include the same IPv4 address; and
a sending module, configured to send an IPv6 packet to the gateway, where the IPv6 packet includes the IPv6 address as a source address.

In another aspect, an embodiment of the present invention provides a gateway, including:
a receiving module, configured to receive an IPv6 packet sent by an IPv6 terminal, where the IPv6 packet includes a destination IPv6 address; and
a first encapsulating module, configured to, if the destination IPv6 address includes an IPv4 address, encapsulate, by the gateway, the IPv6 packet in an IPv4 packet of which a destination address is the IPv4 address, and send the IPv4 packet to a second gateway, where the IPv4 address included in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway include the same IPv4 address.

From the foregoing technical solutions, it can be known that, in the method and device for transmitting the IPv6 packet in the IPv4 network according to the embodiments of the present invention, by encapsulating the IPv6 packet in the IPv4 packet, the traversal of the IPv6 packet through the IPv4 network can be implemented, and an IPv4 address of a gateway corresponding to multiple IPv6 terminals is used as a destination address of the IPv4 packet after encapsulation, which may make the multiple IPv6 terminals correspond to the same IPv4 address, to save IPv4 addresses.

### BRIEF DESCRIPTION OF THE DRAWINGS

To illustrate technical solutions in embodiments of the present invention more clearly, accompanying drawings to be used for describing the embodiments are introduced briefly in the following. Apparently, the accompanying drawings in the following description are some embodiments of the present invention, and persons of ordinary skill in the art can further obtain other drawings according to these accompanying drawings without making creative efforts.
FIG. 1 is a schematic flowchart of a method according to a first embodiment of the present invention;
FIG. 2 is a schematic flowchart of a method according to a second embodiment of the present invention;
FIG. 3a is a schematic diagram of a format of an IPv6 address according to an embodiment of the present invention;
FIG. 3b is a schematic diagram of another format of an IPv6 address according to an embodiment of the present invention;
FIG. 4 is a schematic flowchart of a method according to a third embodiment of the present invention;
FIG. 5 is a schematic structural diagram corresponding to the third embodiment of the present invention;
FIG. 6 is a schematic flowchart of a method according to a fourth embodiment of the present invention;
FIG. 7 is a schematic structural diagram corresponding to the fourth embodiment of the present invention;
FIG. 8 is a schematic structural diagram of a terminal according to a fifth embodiment of the present invention; and
FIG. 9 is a schematic structural diagram of a gateway according to a sixth embodiment of the present invention.

### DETAILED DESCRIPTION OF THE EMBODIMENTS

To make objectives, technical solutions, and advantages of embodiments of the present invention clearer, the technical solutions in the embodiments of the present invention are clearly and completely described below with reference to accompanying drawings in the embodiments of the present invention. Apparently, the described embodiments are merely part rather than all of the embodiments of the present invention. All other embodiments obtained by persons of ordinary skill in the art without creative effort based on the embodiments of the present invention fall within the protection scope of the present invention.

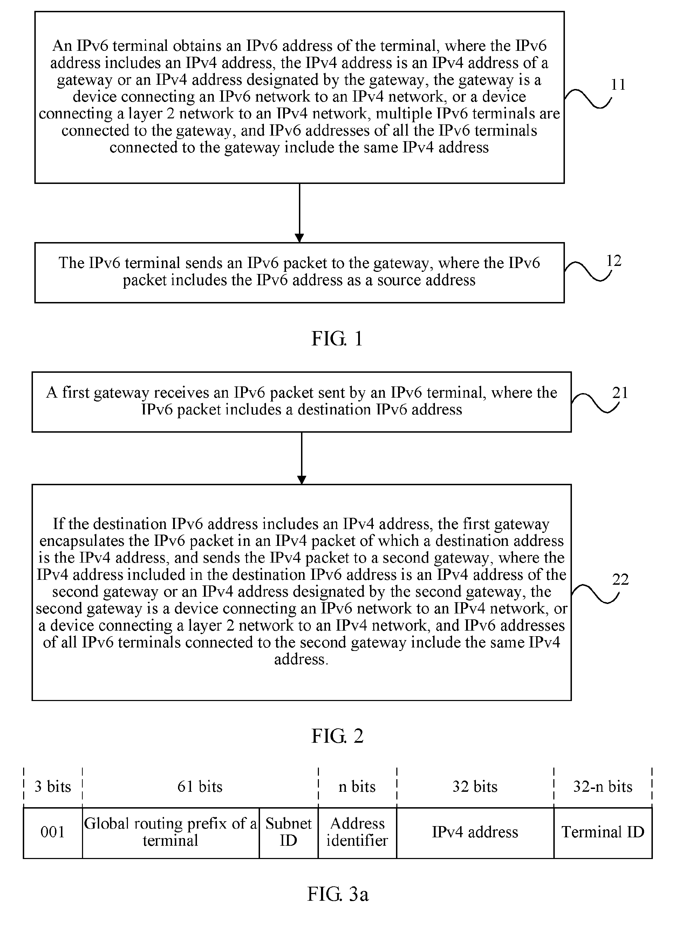

FIG. 1 is a schematic flowchart of a method according to a first embodiment of the present invention, including:
Step 11: An IPv6 terminal obtains an IPv6 address of the terminal, where the IPv6 address includes an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway include the same IPv4 address.

Optionally, the IPv4 address of the gateway may be a compressed IPv4 address. For example, IPv4 addresses which can be assigned by a same operator usually have a same prefix, the foregoing same prefix may be omitted in the IPv4 address that is included in the IPv6 address and is of the gateway or designated by the gateway, that is, the IPv6 address includes a compressed IPv4 address. Because the compressed IPv4 address is always in one-to-one correspondence with an IPv4 address of a gateway in an operator network, the compressed IPv4 address may be used as the IPv4 address of the gateway.

Optionally, to identify that the IPv6 address includes an IPv4 address, a specific field in the IPv6 address may be set to a specific value and then indicate that the IPv6 address includes an IPv4 address, that is, the IPv6 address further includes a specific field value used to indicate that the IPv6 address includes an IPv4 address.

The IPv4 address may be included in the first 64 bits of the IPv6 address, that is, a prefix (prefix) part of the IPv6 address. The IPv4 address may also be included in the last 64 bits of the IPv6 address, that is, a link address part of the IPv6 address.

Step 12: The IPv6 terminal sends an IPv6 packet to the gateway, where the IPv6 packet includes the IPv6 address as a source address.

In this embodiment, the IPv6 address includes the IPv4 address, so the IPv6 packet can be encapsulated in the IPv4 packet when traversing an IPv4 network, to implement traversal of the IPv6 packet through the IPv4 network; and multiple IPv6 terminals correspond to one IPv4 address, which can save IPv4 address resources.

FIG. 2 is a schematic flowchart of a method according to a second embodiment of the present invention, including:
Step 21: A first gateway receives an IPv6 packet sent by an IPv6 terminal, where the IPv6 packet includes a destination IPv6 address.
Step 22: If the destination IPv6 address includes an IPv4 address, the first gateway encapsulates the IPv6 packet in an IPv4 packet of which a destination address is the IPv4 address, and sends the IPv4 packet to a second gateway, where the IPv4 address included in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway include the same IPv4 address.

Optionally, if the IPv4 address of the gateway or designated by the gateway may be a compressed IPv4 address, when the first gateway encapsulates the IPv6 packet in the IPv4 packet of which the destination address is the IPv4 address, the first gateway first recovers the compressed IPv4 address, and then encapsulates the IPv6 packet in an IPv4 packet of which a destination address is the recovered IPv4 address. For example, IPv4 addresses which can be assigned by a same operator usually have a same prefix, and the foregoing same prefix may be omitted in the IPv4 address that is included in the IPv6 address and is of the gateway or designated by the gateway. The first gateway adds the omitted part, that is, the foregoing same prefix, before the IPv4 address to obtain the recovered IPv4 address.

Optionally, the first gateway may judge, according to whether the destination IPv6 address includes a related indication, whether an IPv4 address is included, that is, if the destination IPv6 address includes a specific field value which is used to indicate that the destination IPv6 address includes an IPv4 address, the first gateway judges that the destination IPv6 address includes an IPv4 address.

In addition, this embodiment may further include that: if the destination IPv6 address does not include an IPv4 address, the first gateway encapsulates the IPv6 packet in an IPv4 packet, where a destination IPv4 address of the IPv4 packet is an IPv4 address of a specific gateway.

To enable the second gateway to perform decapsulation correctly, this embodiment further includes that: the first gateway sets a protocol type in a header of the IPv4 packet to a specific value to identify that an IPv6 packet is encapsulated in the IPv4 packet.

The IPv4 address may be included in the first 64 bits of the IPv6 address. In addition, the IPv4 address may also be included in the last 64 bits of the IPv6 address.

In this embodiment, by encapsulating the IPv6 packet in the IPv4 packet, traversal of the IPv6 packet through an IPv4 network can be implemented, and an IPv4 address of a gateway corresponding to multiple IPv6 terminals is used as a destination address of an IPv4 packet after encapsulation, which may make the multiple IPv6 terminals correspond to the same IPv4 address, to save IPv4 addresses.

In the embodiment of the present invention, to make the IPv6 packet traverse the IPv4 network, the assignment of the IPv6 address needs to be improved, so that the IPv6 address includes an IPv4 address, and the IPv4 address corresponds to multiple IPv6 terminals. Specifically, an IPv6 address shown in FIG. 3a may be assigned in a PPPoE process or a dynamic host configuration protocol (Dynamic Host Configuration Protocol, DHCP) process.

FIG. 3a is a schematic diagram of a format of an IPv6 address according to an embodiment of the present invention. Referring to FIG. 3a, the IPv6 address includes: an identification part occupying 3 bits (which is specifically 001), a prefix part occupying 61 bits, and a link address (link address) part occupying 64 bits. In the embodiment of the present invention, the prefix part includes a global routing prefix and a subnet ID of a terminal. Routing hierarchy may be achieved by using global routing and the subnet ID, for example, it may be set that the first 24 bits of the prefix part represent a country, the following 10 bits represent a city, and other bits represent a cell, so as to achieve a multi-level address. The link address part may include an IPv4 address, for example, the middle 32 bits of the link address are used to carry the IPv4 address. In addition, the first n bits of the link address are used as an identifier (Identifier), to indicate that the IPv6 address includes an IPv4 address. The remaining 32-n bits of the link address are used to represent a terminal ID to differentiate different terminals corresponding to the same IPv4 address.

Definitely, it can be understood that, in FIG. 3a, a position where the IPv4 address is included is not limited to the foregoing position of the link address part, and the IPv4 address may be included in another position of the link address part. In addition, the position is not limited to the link address part, and the IPv4 address may also be included in another part of the IPv6 address.

For example, the position of the IPv4 address may be at the prefix part of the IPv6 address.

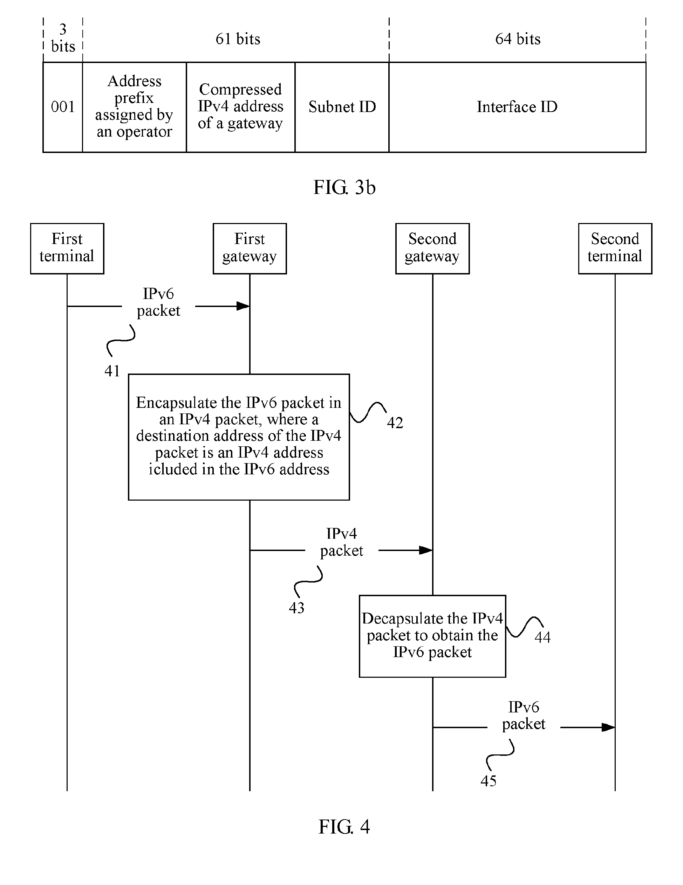

FIG. 3b is a schematic diagram of another format of an IPv6 address according to an embodiment of the present invention. The IPv6 address includes: an identification part occupying 3 bits (which is specifically 001), a prefix part occupying 61 bits, and a link address (link address) part occupying 64 bits. In the embodiment of the present invention, the prefix part includes an address prefix assigned by an operator, a compressed IPv4 address, and a subnet ID.

An improved solution for the IPv6 address has been described above, and a procedure that an IPv6 packet traverses an IPv4 network will be described in the following.

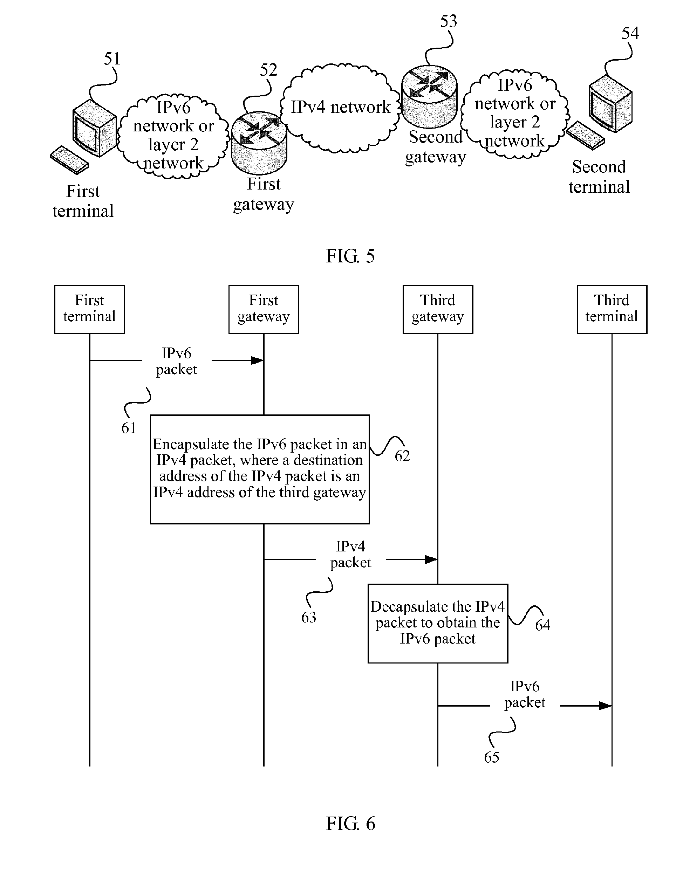

FIG. 4 is a schematic flowchart of a method according to a third embodiment of the present invention, and FIG. 5 is a schematic structural diagram corresponding to the third embodiment of the present invention. Referring to FIG. 5, a first terminal 51, a first gateway 52, a second gateway 53, and a second terminal 54 are included, where both the first terminal 51 and the second terminal 54 are IPv6 terminals, of which corresponding addresses are IPv6 addresses in the format shown in FIG.3a. What is between the first gateway 52 and the second gateway 53 is an IPv4 network. What is between the first terminal 51 and the first gateway 52 may be an IPv6 network or a layer 2 network, and what is between the second gateway 53 and the second terminal 54 may be an IPv6 network or a layer 2 network. In this embodiment, an example where the first terminal 51 sends an IPv6 packet to the second terminal 54 is used. Referring to FIG. 4, this embodiment includes:
Step 41: The first terminal sends an IPv6 packet to the first gateway.

If what is between the first terminal and the first gateway is an IPv6 network, the first terminal may send the IPv6 packet to the first gateway; if what is between the first terminal and the first gateway is a layer 2 network, because the layer 2 network doesn't care an upper layer protocol, the first terminal may send the IPv6 packet to the first gateway as well.

In FIG. 5, an example where the second gateway is connected to one second terminal is used. However, in actual implementation, the second gateway may be connected to multiple second terminals, where all IPv6 addresses of the multiple second terminals include an IPv4 address of the second gateway. When the second gateway is connected to multiple second terminals and the first terminal needs to send an IPv6 packet to any one of the multiple second terminals, a destination IPv6 address of the IPv6 packet includes the IPv4 address of the second gateway. Definitely, an IPv4 address included in an IPv6 address is not limited to an IPv4 address of a gateway, and may be a public network IPv4 address designated by the gateway. In addition, to save IPv4 addresses, the public network IPv4 address designated by the gateway needs to correspond to multiple IPv6 terminals, and the gateway has published a route of the designated IPv4 address in an IPv4 network.

In the embodiment of the present invention, an example where the IPv4 address is the IPv4 address of the gateway is used.
Step 42: The first gateway encapsulates the IPv6 packet in an IPv4 packet, where a destination address of the IPv4 packet is the IPv4 address included in the IPv6 address.

Because what is between the first gateway and the second gateway is an IPv4 network, and the IPv6 packet cannot be transmitted directly, the IPv6 packet needs to be encapsulated, and the IPv6 packet may be encapsulated as a payload in the IPv4 packet. In addition, the IPv4 packet has a source IPv4 address being an IPv4 address of the first gateway, and the destination IPv4 address being the IPv4 address included in the IPv6 packet.

In addition, a value of a protocol type in a header of the IPv4 packet may be set to a specific value, where the specific value indicates that an IPv6 packet is encapsulated in the IPv4 packet.
Step 43: The first gateway sends the IPv4 packet to the second gateway.
Step 44: The second gateway decapsulates the IPv4 packet to obtain the IPv6 packet.

After determining, according to the protocol type in the header of the IPv4 packet, that an IPv6 packet is encapsulated in the IPv4 packet, the second gateway decapsulates the IPv4 packet to obtain the IPv6 packet.

In some cases, for example that the gateway uses, by default, an encapsulation manner in the embodiment of the present invention, the second gateway may also directly determine that an IPv6 packet is encapsulated in the IPv4 packet, and decapsulate the IPv4 packet to obtain the IPv6 packet.
Step 45: The second gateway sends the second terminal the IPv6 packet obtained through decapsulation.

In this embodiment, the example where the first terminal sends the IPv6 packet to the second terminal is used. A similar process may be used when the second terminal sends an IPv6 packet to the first terminal, and the only difference is that the first terminal and the second terminal need to interchange their roles, and the first gateway and the second gateway need to interchange their roles. For example, when an IPv6 packet sent by the second terminal is sent to the second gateway, the second gateway encapsulates the IPv6 packet in an IPv4 packet, where the IPv4 packet has a destination IPv4 address being the IPv4 address of the first gateway. Further, the second gateway sets a protocol type value of the IPv4 packet to a specific value, so that the first gateway parses the received IPv4 packet to obtain the IPv6 packet.

In this embodiment, by using an IPv4 address of a gateway as a destination IPv4 address of an IPv4 packet for encapsulating an IPv6 packet, the consumption of IPv4 addresses may not be increased, thereby saving IPv4 addresses. By setting that terminals under a same gateway correspond to a same IPv4 address, only a pair of IPv4 routing paths in the IPv4 network may be needed when the multiple terminals are used as destination ends, thereby reducing routing overheads. By using an IPv4 address, included in an IPv6 address, as a destination address during IPv4 packet encapsulation, the establishment and maintenance of a tunnel may be avoided.

In the third embodiment, an example of communication between peers is used, that is, IPv6 addresses of both the first terminal and the second terminal are in the format shown in FIG. 3a. Communication between non-peers is described in the following, where non-peer refers to that one of two communicating terminals does not have the format shown in FIG. 3a.

The following describes a procedure that an IPv6 packet traverses an IPv4 network, when an IPv4 address is a compressed IPv4 address.

The first terminal sends an IPv6 packet to the first gateway.

If what is between the first terminal and the first gateway is an IPv6 network, the first terminal may send the IPv6 packet to the first gateway; if a layer 2 network is provided between the first terminal and the first gateway, because the layer 2 network doesn't care an upper layer protocol, the first terminal may also send the IPv6 packet to the first gateway as well.

In actual implementation, the second gateway may be connected to multiple second terminals, where IPv6 addresses of all the multiple terminals include an IPv4 address of the second gateway, and the IPv4 address of the second gateway is a compressed IPv4 address. When the second gateway is connected to multiple second terminals and the first terminal needs to send an IPv6 packet to any one of the multiple second terminals, a destination IPv6 address of the IPv6 packet includes the IPv4 address of the second gateway, where with a same part of a same operator network being omitted, the IPv4 address is a compressed IPv4 address.

The first gateway encapsulates the IPv6 packet in an IPv4 packet, where a destination address of the IPv4 packet is the IPv4 address included in the IPv6 address.

Because what is between the first gateway and the second gateway is an IPv4 network, and the IPv6 packet cannot be transmitted directly, the IPv6 packet needs to be encapsulated, and the IPv6 packet may be encapsulated as a payload in the IPv4 packet. In addition, the IPv4 packet has a source IPv4 address being an IPv4 address of the first gateway, and the destination IPv4 address being the IPv4 address included in the IPv6 packet. Because the IPv4 address included in the IPv6 packet is a compressed IPv4 address, the first gateway first recovers the compressed IPv4 address, that is, adds the omitted part to the IPv4 address, to obtain the recovered IPv4 address, where the destination IPv4 address of the IPv4 packet is the recovered IPv4 address.

In addition, a value of a protocol type in a header of the IPv4 packet may be set to a specific value, where the specific value indicates that an IPv6 packet is encapsulated in the IPv4 packet.
Step 43: The first gateway sends the IPv4 packet to the second gateway.
Step 44: The second gateway decapsulates the IPv4 packet to obtain the IPv6 packet.

The second gateway may determine, according to the protocol type in the header of the IPv4 packet, that an IPv6 packet is encapsulated in the IPv4 packet, and decapsulate the IPv4 packet to obtain the IPv6 packet.

In some cases, for example that the gateway uses, by default, an encapsulation manner in the embodiment of the present invention, the second gateway may also directly determine that an IPv6 packet is encapsulated in the IPv4 packet, and decapsulate the IPv4 packet to obtain the IPv6 packet.
Step 45: The second gateway sends the second terminal the IPv6 packet obtained through decapsulation.

In this embodiment, the example where the first terminal sends the IPv6 packet to the second terminal is used. A similar process may be used when the second terminal sends an IPv6 packet to the first terminal, and the only difference is that the first terminal and the second terminal need to interchange their roles, and the first gateway and the second gateway need to interchange their roles. For example, when an IPv6 packet sent by the second terminal is sent to the second gateway, the second gateway encapsulates the IPv6 packet in an IPv4 packet, where the IPv4 packet has a destination IPv4 address being the IPv4 address of the first gateway. Further, the second gateway may set a protocol type value of the IPv4 packet to a specific value, so that the first gateway parses the received IPv4 packet to obtain the IPv6 packet.

In this embodiment, by using an IPv4 address of a gateway as a destination IPv4 address of an IPv4 packet for encapsulating an IPv6 packet, the consumption of IPv4 addresses may not be increased, thereby saving IPv4 addresses. By setting that terminals under a same gateway correspond to a same IPv4 address, only a pair of IPv4 routing paths in the IPv4 network may be needed when the multiple terminals are used as destination ends, thereby reducing routing overheads. By using an IPv4 address, included in an IPv6 address, as a destination address during IPv4 packet encapsulation, the establishment and maintenance of a tunnel may be avoided.

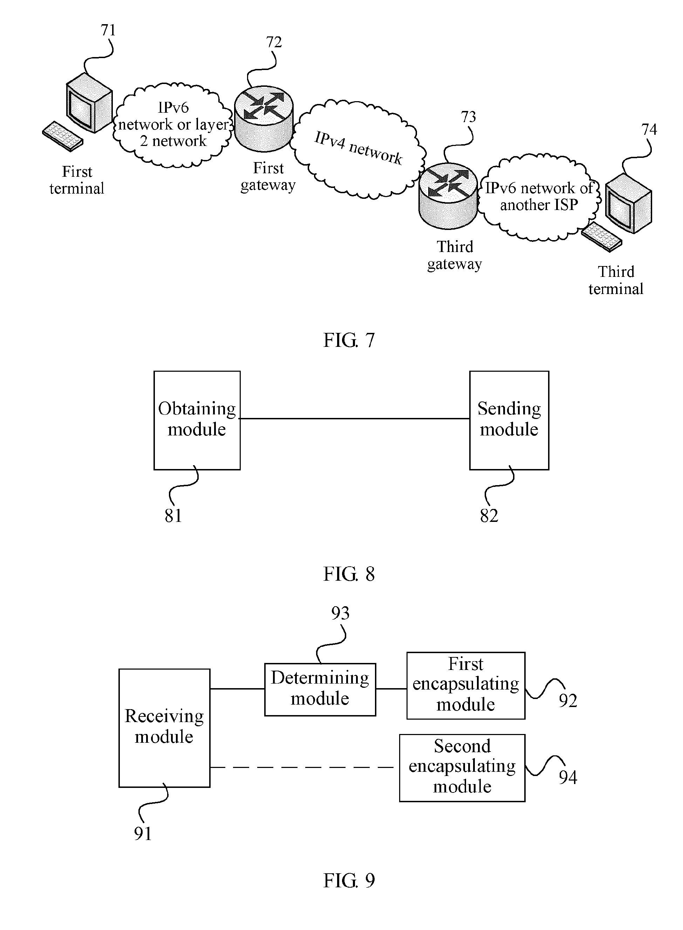

FIG. 6 is a schematic flowchart of a method according to a fourth embodiment of the present invention, and FIG. 7 is a schematic structural diagram corresponding to the fourth embodiment of the present invention. Referring to FIG. 7, a first terminal 71, a first gateway 72, a third gateway 73, and a third terminal 74 are included, where both the first terminal 71 and the third terminal 74 are IPv6 terminals, of which corresponding addresses are IPv6 addresses; however, an IPv6 address of the first terminal 71 is in the format shown in FIG. 3a or FIG. 3b, and an IPv6 address of the third terminal 74 is not in the format shown in FIG. 3a or FIG. 3b. What is between the first gateway 72 and the third gateway 73 is an IPv4 network. What is between the first terminal 71 and the first gateway 72 may be an IPv6 network or a layer 2 network, and in this embodiment, an example where what is between the third gateway 73 and the third terminal 74 is an IPv6 network of an ISP other than an internet service provider (Internet Service Provider, ISP) to which the first terminal belongs is used. Definitely, the third gateway may also be another specific gateway corresponding to an IPv6 address which is not in the format shown in FIG. 3a or FIG. 3b, and is not limited to a gateway connected to a different ISP. In this embodiment, an example where the first terminal 71 sends an IPv6 packet to the third terminal 74 is used. Referring to FIG. 6, this embodiment includes:
Step 61: The first terminal sends an IPv6 packet to the first gateway.

For details, reference may be made to step 41.
Step 62: The first gateway encapsulates the IPv6 packet in an IPv4 packet, where a destination address of the IPv4 packet is an IPv4 address of the third gateway.

In a certain network, a specific gateway may be set, and the specific gateway may be a gateway between the network and another network. For example, referring to FIG. 7, because the third gateway connects the IPv6 network, to which the first gateway belongs, to another IPv6 network, the third gateway is the specific gateway.

Therefore, when the first gateway receives an IPv6 packet, and obtains that an IPv6 address in the IPv6 packet is not in the format shown in FIG. 3a or FIG. 3b, the IPv6 packet needs to be encapsulated in an IPv4 packet and then sent to the specific gateway. An IPv4 address of the specific gateway may be set in the first gateway, so that when the IPv6 packet is encapsulated, the IPv4 address of the specific gateway is used as a destination IPv4 address, and an IPv4 address of the first gateway is used as a source IPv4 address. In this way, the received IPv6 packet is encapsulated by the first gateway and then sent to the specific gateway.

In addition, a value of a protocol type in a header of the IPv4 packet may be set to a specific value, where the specific value indicates that an IPv6 packet is encapsulated in the IPv4 packet.
Step 63: The first gateway sends the IPv4 packet to the third gateway.
Step 64: The third gateway decapsulates the IPv4 packet to obtain the IPv6 packet.

After determining, according to the protocol type in the header of the IPv4 packet, that an IPv6 packet is encapsulated in the IPv4 packet, the third gateway decapsulates the IPv4 packet to obtain the IPv6 packet.
Step 65: The third gateway sends the third terminal the IPv6 packet obtained through decapsulation.

In this embodiment, the example where the first terminal sends the IPv6 packet to the third terminal is used. A similar process may be used when the third terminal sends an IPv6 packet to the first terminal, and the only difference is that the first terminal and the third terminal need to interchange their roles, and the first gateway and the third gateway need to interchange their roles. For example, when an IPv6 packet sent by the third terminal is sent to the third gateway, the third gateway encapsulates the IPv6 packet in an IPv4 packet, where the IPv4 packet has a destination IPv4 address being the IPv4 address of the first gateway, and a source IPv4 address being the IPv4 address of the third gateway. Further, the third gateway sets a protocol type value of the IPv4 packet to a specific value, so that the first gateway parses the received IPv4 packet to obtain the IPv6 packet.

In this embodiment, by using an IPv4 address of a gateway as a destination IPv4 address, the consumption of IPv4 addresses may not be increased, thereby saving IPv4 addresses. By setting that terminals under a same gateway correspond to a same IPv4 address, only a pair of IPv4 routing paths in the IPv4 network may be needed when the multiple terminals are used as destination ends, thereby reducing routing overheads. By using an IPv4 address, included in an IPv6 address, as a destination address during IPv4 packet encapsulation, the establishment and maintenance of a tunnel may be avoided.

FIG. 8 is a schematic structural diagram of a terminal according to a fifth embodiment of the present invention, including: an obtaining module 81 and a sending module 82. The obtaining module 81 is configured to obtain an IPv6 address of the terminal, where the IPv6 address includes an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway include the same IPv4 address. The sending module 82 is configured to send an IPv6 packet to the gateway, where the IPv6 packet includes the IPv6 address as a source address.

The IPv4 address of the gateway may be a compressed IPv4 address.

The IPv6 address obtained by the obtaining module 81 further includes a specific field value used to indicate that the IPv6 address includes an IPv4 address.

The IPv4 address that is included in the IPv6 address obtained by the obtaining module 81 may be in the first 64 bits of the IPv6 address. The IPv4 address that is included in the IPv6 address obtained by the obtaining module 81 may also be in the last 64 bits of the IPv6 address.

In this embodiment, because the IPv6 address includes the IPv4 address, the IPv6 packet may be encapsulated in the IPv4 packet when traversing an IPv4 network, so as to implement traversal of the IPv6 packet through the IPv4 network; and because multiple IPv6 terminals correspond to one IPv4 address, IPv4 address resources can be saved.

FIG. 9 is a schematic structural diagram of a gateway according to a sixth embodiment of the present invention, including a receiving module 91 and a first encapsulating module 92. The receiving module 91 is configured to receive an IPv6 packet sent by an IPv6 terminal, where the IPv6 packet includes a destination IPv6 address. The first encapsulating module 92 is configured, if the destination IPv6 address includes an IPv4 address, encapsulate, by the gateway, the IPv6 packet in an IPv4 packet of which a destination address is the IPv4 address, and send the IPv4 packet to a second gateway, where the IPv4 address included in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway include the same IPv4 address.

Optionally, the first encapsulating module may be specifically configured to, if the destination IPv6 address includes an IPv4 address and the IPv4 address in the IPv6 packet received by the receiving module is a compressed IPv4 address, recover the compressed IPv4 address, and encapsulate the IPv6 packet in an IPv4 packet of which a destination address is the recovered IPv4 address.

Optionally, this embodiment may further include a determining module 93, where the determining module 93 is configured to, according to a specific field value that is included in the destination IPv6 address and used to indicate that the destination IPv6 address includes an IPv4 address, determine that the destination IPv6 address includes an IPv4 address.

In addition, this embodiment may further include a receiving module 91 and a second encapsulating module 94, where the second encapsulating module 94 is configured to, if the destination IPv6 address does not include an IPv4 address, encapsulate the IPv6 packet in an IPv4 packet, where a destination IPv4 address of the IPv4 packet is an IPv4 address of a specific gateway.

The first encapsulating module 92 may be further configured to set a protocol type in a header of the IPv4 packet to a specific value, to identify that an IPv6 packet is encapsulated in the IPv4 packet.

In this embodiment, by encapsulating the IPv6 packet in the IPv4 packet, traversal of the IPv6 packet through an IPv4 network can be implemented, and an IPv4 address of a gateway corresponding to multiple IPv6 terminals is used as a destination address of the IPv4 packet after encapsulation, which may make the multiple IPv6 terminals correspond to the same IPv4 address, to save IPv4 addresses.

It can be understood that, for related features in the foregoing methods and devices, reference may be made to each other. In addition, "first" and "second" in the foregoing embodiments are used to differentiate the embodiments, but do not imply the preference among the embodiments.

Persons of ordinary skill in the art can understand that all or part of the steps in the foregoing method embodiments may be implemented by a program instructing relevant hardware. The program may be stored in a computer readable storage medium. When the program runs, the steps of the foregoing method embodiments are executed. The storage medium may include various media capable of storing program codes, such as a ROM, a RAM, a magnetic disk, or a CD-ROM.

Finally, it should be noted that the foregoing embodiments are merely provided for illustrating the technical solutions of the present invention, but not intended to limit the present invention. Although the present invention are illustrated in detail with reference to the embodiments, persons of ordinary skill in the art should understand that, they still can make modifications to the technical solution recorded in each of the embodiments, or equivalent replacements to some technical features in the technical solution; and such modifications or replacements do not cause the essence of corresponding technical solutions to depart from the spirit and scope of the technical solutions in each of the embodiments of the present invention.

## Claims

1. A method for transmitting an IPv6 packet in an IPv4 network, comprising:
obtaining, by an IPv6 terminal, an IPv6 address of the terminal, wherein the IPv6 address comprises an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway comprise the same IPv4 address; and
sending, by the IPv6 terminal, an IPv6 packet to the gateway, wherein the IPv6 packet comprises the IPv6 address as a source address.

2. The method according to claim 1, wherein the IPv4 address of the gateway is a compressed IPv4 address.

3. The method according to claim 1 or 2, wherein the IPv6 address further comprises a specific field value used to indicate that the IPv6 address comprises an IPv4 address.

4. A method for transmitting an IPv6 packet in an IPv4 network, comprising:
receiving, by a first gateway, an IPv6 packet sent by an IPv6 terminal, wherein the IPv6 packet comprises a destination IPv6 address; and
if the destination IPv6 address comprises an IPv4 address, encapsulating, by the first gateway, the IPv6 packet in an IPv4 packet of which a destination address is the IPv4 address, and sending the IPv4 packet to a second gateway, wherein the IPv4 address comprised in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway comprise the same IPv4 address.

5. The method according to claim 4, wherein if the IPv4 address is a compressed IPv4 address, the encapsulating, by the first gateway, the IPv6 packet in an IPv4 packet of which a destination address is the IPv4 address specifically comprises:
recovering, by the first gateway, the compressed IPv4 address, and encapsulating the IPv6 packet in an IPv4 packet of which a destination address is the recovered IPv4 address.

6. The method according to claim 4 or 5, further comprising:
according to a specific field value that is comprised in the destination IPv6 address and used to indicate that the destination IPv6 address comprises an IPv4 address, determining, by the first gateway, that the destination IPv6 address comprises an IPv4 address.

7. The method according to claim 4, further comprising:
if the destination IPv6 address does not comprise an IPv4 address, encapsulating, by the first gateway, the IPv6 packet in an IPv4 packet, wherein a destination IPv4 address of the IPv4 packet is an IPv4 address of a specific gateway.

8. The method according to any one of claims 4 to 7, further comprising:
setting, by the first gateway, a protocol type in a header of the IPv4 packet to a specific value, to identify that an IPv6 packet is encapsulated in the IPv4 packet.

9. A terminal, comprising:
an obtaining module, configured to obtain an IPv6 address of the terminal, wherein the IPv6 address comprises an IPv4 address, the IPv4 address is an IPv4 address of a gateway or an IPv4 address designated by the gateway, the gateway is a device connecting an IPv6 network to an IPv4 network, or a device connecting a layer 2 network to an IPv4 network, multiple IPv6 terminals are connected to the gateway, and IPv6 addresses of all the IPv6 terminals connected to the gateway comprise the same IPv4 address; and
a sending module, configured to send an IPv6 packet to the gateway, wherein an IPv6 packet comprises the IPv6 address as a source address.

10. The method according to claim 9, wherein the IPv4 address of the gateway is a compressed IPv4 address.

11. The terminal according to claim 9 or 10, wherein the IPv6 address obtained by the obtaining module further comprises a specific field value used to indicate that the IPv6 address comprises an IPv4 address.

12. A gateway, comprising:
a receiving module, configured to receive an IPv6 packet sent by an IPv6 terminal, wherein the IPv6 packet comprises a destination IPv6 address; and
a first encapsulating module, configured to, if the destination IPv6 address comprises an IPv4 address, encapsulate the IPv6 packet in an IPv4 packet of which a destination address is the IPv4 address, and send the IPv4 packet to a second gateway, wherein the IPv4 address comprised in the destination IPv6 address is an IPv4 address of the second gateway or an IPv4 address designated by the second gateway, the second gateway is a device connecting an IPv6 network to an IPv4 network, or a device connecting a layer 2 network to an IPv4 network, and IPv6 addresses of all IPv6 terminals connected to the second gateway comprise the same IPv4 address.

13. The gateway according to claim 12, wherein the first encapsulating module is specifically configured to, if the destination IPv6 address comprises an IPv4 address, and the IPv4 address in the IPv6 packet received by the receiving module is a compressed IPv4 address, recover the compressed IPv4 address, and encapsulate the IPv6 packet in an IPv4 packet of which a destination address is the recovered IPv4 address.

14. The gateway according to claim 12 or 13, further comprising:
a determining module, configured to, according to a specific field value that is comprised in the destination IPv6 address and used to indicate that the destination IPv6 address comprises an IPv4 address, determine that the destination IPv6 address comprises an IPv4 address.

15. The gateway according to claim 12, further comprising:
a second encapsulating module, configured to, if the destination IPv6 address does not comprise an IPv4 address, encapsulate the IPv6 packet in an IPv4 packet, wherein a destination IPv4 address of the IPv4 packet is an IPv4 address of a specific gateway.

16. The gateway according to any one of claims 12 to 15, wherein the first encapsulating module is further configured to set a protocol type in a header of the IPv4 packet to a specific value, to identify that an IPv6 packet is encapsulated in the IPv4 packet.
